# EUROPEAN PATENT SPECIFICATION

(11) **EP 3 627 286 B1**
(45) Date of publication and mention of the grant of the patent: **19.01.2022**
(21) Application number: 18196030.3
(22) Date of filing: 21.09.2018
(51) Int. Cl.: G06F 3/01, F16C 35/067, G06F 3/0362, F16C 19/50, F16C 19/52, F16C 33/34, F16C 43/04

(54) **ROTARY INTERFACE ELEMENT**
DREHSCHNITTSTELLENELEMENT
ÉLÉMENT D'INTERFACE ROTATIF

(43) Date of publication of application: 25.03.2020
(73) Proprietor: DAV, 94046 Créteil Cedex (FR)
(72) Inventor: KRUPKA, Ales, 10800 Praha 10 - Strasnice (CZ)
(74) Representative: Delplanque, Arnaud

(56) References cited:
- US-A1- 2013 229 339
- US-A1- 2014 169 718

## Description

The invention relates to a rotary interface element, in particular for the interior compartment or cabin of a vehicle, and of the flushing kind.

Flushing rotary interface elements comprise a disc shaped rotor element, flushing with the surface on which they are mounted. The user actuates the interface element by rotating the disc shaped rotor, using generally one or more fingers pressed against the disc shaped rotor.

An annular encoder (magnetic, optic, etc.) detects the rotational position of the rotor and its rotational movement, and generates a corresponding signal used to modify parameters and functions of different elements of the car or other. The signal could for example be used to control air conditioning power and temperature setpoint, or media player track number or sound volume.

The disc shaped rotor is placed in a corresponding disc shaped recess, the outer portion of which rests against the disc shaped rotor, and thus forms a contact bearing for the disc shaped rotor.

When increasing the diameter of the rotary interface element, the friction caused by the contact bearing increases, unless cost increasing surface treatments are applied. The friction is moreover thus only slightly reduced.

Grease or another lubricant would also have to be refilled regularly.

The friction can also cause vibrations and noise, which the user perceives through the finger in contact with the rotor or as friction noise.

In other embodiments, the disc shaped rotor is "floating" in that only a central bearing is implemented, reduced in diameter and/or surrounding a rotor shaft. The outer portions of the rotor disc are consequently unsupported.

With an increasing diameter, the torque caused by the user pressing his finger against the outer portion of the rotor increases, causing a portion of the disc shaped rotor to bend inwards, and/or deforming the rotor shaft. This decreases the perceived value of the interface element and is potentially damaging for the central bearing or the rotor shaft (by plastic deformation or creeping over time).

The use of bearings such as ball bearings introduces moving parts that require precise machining, costly materials and generates noise that reduces perceived quality. Such bearings are known in rotary interface elements such as the element, although non flushing, disclosed in US2013/229339.

There is consequently a need for a rotary interface element which can be of important diameter while remaining rigid, with only reduced additional costs.

An additional problem, solved by the dependent claims, is that when creating haptic feedback, the vibrations cause noise which is perceived as lower quality of the interface element.

In order to overcome, at least partially, the previously mentioned problems, the invention proposes a rotary interface element according to claim 1.

The rotary interface element thus obtained has a supported rotor disc due to the presence of the radial rollers, which can be cheaply obtained when compared to ball bearings which must be precisely shaped, and are often made of metal.

The rotary interface element may comprise one or more of the following characteristics, taken separately or in combination.

The radial rollers may comprise each a noise reducing ring, which is in contact with the rotor disc.

The noise reducing ring may be made of elastic material, in particular rubber.

The noise reducing rings may be overmoulded on the central bodies of the radial rollers.

The rollers may comprise two axial shafts at opposite axial ends of the central body and the housings for the radial rollers may comprise two radially opposite slits for the axial shafts.

The radial rollers may comprise two spacing shoulders with intermediate diameter between the diameters of the central body and of the axial shafts, situated at the opposite axial ends of the central body and forming a base from which the axial shafts extend.

The bottom disc may comprise a bottom shaft portion, and the rotor shaft and the bottom shaft portion may comprise for one a tubular hole and for the other a tubular portion mutually frictionally engaged in one another.

It may further comprise a bent ring of elastic material, bent along a diameter, comprising two top arches that are pointing towards the rotor disc, and two bottom arches that are pointing towards the bottom disc, the top arches carrying two locking fingers that engage in holes in the stator and the bottom arches carrying two haptic fingers that engage in the haptic asperities.

The bent ring may be made of moulded plastic.

The haptic fingers may be smaller convex arches, pointing towards the bottom disc on the bottom portions of the bottom arches.

Other characteristics and benefits of the invention will appear when reading the description of the figures, given in an exemplary and not limiting fashion, among which:
- figure 1 is a schematic view of a vehicle interior, with a user interacting with a rotary interface element,
- figure 2 is a cutaway in an axial plane of the rotary interface element,
- figure 3 is a more detailed view of a radial roller according to the invention,
- figure 4 is an exploded view of a rotary interface element
- figure 5 is a more detailed view of the bent ring.

On all figures, the same reference applies to a same or equivalent element.

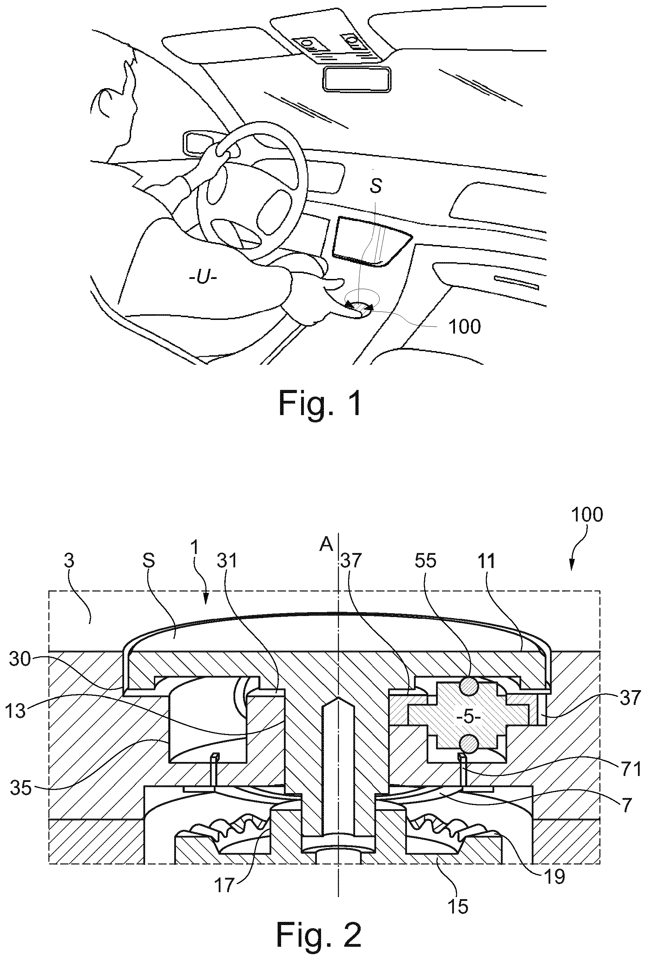

Figure 1 is a schematic view of the interior compartment or cabin of a vehicle, in particular a car. The cabin comprises interface elements, and in particular a flushing rotary interface element 100 on a central console, the inclined or vertical surface above the transmission tunnel, between the driver and passenger seats.

The rotary interface element 100 is a flushing rotary element in that it presents a disc shaped contact surface S that is flush with the surface of the car interior it is implemented on. A user *U* is interacting with said contact surface *S*, by pressing one or more fingers on, said surface and rotating it.

A cutaway of the rotary interface element is represented in figure 2. The cutaway plane in in figure 2 is a plane containing the rotational axis *A* of the rotating parts of the rotary interface element 100, orthogonal to the contact surface *S* and passing through its centre.

Some elements are hereafter orientated and mutually located using terms like "over", "under", "above" etc. To define the corresponding top to bottom orientation, the rotary interface element 100 is considered installed on a horizontal surface, with its contact surface *S* on top, as represented in the figures.

The rotary interface element 100 comprises a rotor 1, mobile in rotation around the rotational axis *A* with respect to a stator 3. The rotor 1 comprises a rotor disc 11, the superior surface of which forms the contact surface *S*, a rotor shaft 13, and a bottom disc 15 at the end of the rotor shaft 13 opposite the rotor disc 11.

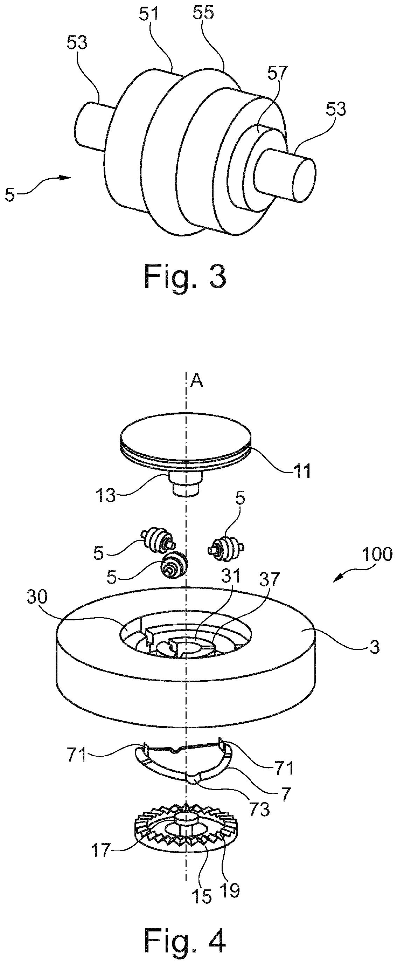

The stator 3 comprises a disc shaped recess 30 (see in particular figure 4), in which the rotor disc 11 is placed when assembled, so that the superior surface *S* is flush with the surrounding surface of the central console. The stator 3 comprises a tubular through hole forming a stator bearing 31, in which the rotor shaft 13 is placed when assembled.

The bottom disc 15 comprises a bottom shaft portion 17 that frictionally engages the rotor shaft 13 to block the rotor 1 in axial translation in the stator bearing 31. In particular, the bottom shaft portion 17 is here a tubular portion that surrounds a bottom segment of the rotor shaft 13.

To register the rotation of the rotor 1, a rotational detector may be linked to the rotor 1. For example, the bottom disc 15 may comprise optical markings (mirror, fingers, etc.) regularly placed on an outer rim, that pass in front of an optical detector (e.g. light emitting diode and photodiode).

As an alternative, the bottom disc 15 and/or the rotor shaft 13 comprise a magnet, the position or orientation of which is determined using one or more Hall effect sensors. The rotation of the rotor 1 consequently causes an electronic control signal to be generated, which is then used to modify parameters of functions of different organs of the vehicle (air conditioning, media player, etc.).

The rotary interface element 100 also comprises radial rollers 5, here in particular three (see figure 4), which are regularly placed, here 120° apart, around the rotor shaft 13, under the rotor disc 11. The cut away plane of figure 2 cuts across one of the radial rollers 5, which is lodged in a housing of the stator 3. Bigger rotary interface elements 100 (with a higher rotor disc 11 radius) can have more than three radial rollers, for example four, five or more, which are regularly or almost regularly placed around the rotor shaft 13 in a radial orientation.

One such radial roller 5 is represented in more detail and in perspective in figure 3.

The radial rollers 5 comprise a cylindrical body 51, with two axial shafts 53 extending from the centre of the flat sides of the cylindrical body 51. The axial shafts 53 are, when assembled, placed in slits 37 of the stator 3 (see figure 2). The cylindrical bodies 51 of the radial rollers 5 are lodged in an annular recess 35 of the stator 3. The slits 37 and the annular recess 35 create one example of housing for the radial rollers 5. Other possibilities would for example include individual tubular housings for each of the cylindrical bodies 51 of the radial rollers 5 each having slits 37 for the axial shafts 53.

The radial rollers 5 comprise a noise reducing ring 55 on the outer surface of the central body 51, axially at or around its centre, which forms a contact surface with the rotor disc 11, and in particular its underside (opposite contact surface S). The noise reducing ring 55 is here a toroidal rubber ring.

The central bodies 51 and/or the noise reducing rings 55 are partially above a bottom surface of the disc shaped recess 30, so that they rest against the rotor disc 11 and support it, so as to reduce or even suppress deformation under pressure of the user's finger U.

In particular, the radial rollers 5, the rotor 1 and the stator 3 are made of hard plastic material (TPE-V, SEBS, etc.) by moulding, preferably injection moulding, and the noise reducing ring 55 is made of soft rubber or expanded polymer, preferably overmoulded over the injection moulded central bodies 51.

The radial rollers 5 comprise two spacing shoulders 57 with intermediate diameter between the diameters of the cylindrical body 51 and of the axial shafts 53. Said spacing shoulders 57 are situated on the axial sides at the opposite axial ends of the cylindrical body 51 and form a base from which the axial shafts 53 extend.

The spacing shoulders 57 rest, when assembled, against the rotor 3 around the slits 37, where they on one hand secure the axial positioning of the radial rollers 5, and on the other hand form a reduced friction surface when the roller 5 is rolling.

The presence of the radial rollers 5 ensures on one hand support for the rotor disc 11, and on the other hand a smooth and noiseless rotation movement of said rotor disc 11.

To generate a haptic feedback, the bottom disc 15 is provided with haptic asperities 19 on its outer rim on the surface facing the rotor disc 11 when assembled. The haptic asperities 19 comprise here in particular teeth giving the bottom disc 15 a crown like outer rim, but grooves could also be implemented with a similar effect.

The rotary interface element 100 also comprises a bent ring 7 in a tubular recess on its underside.

The elements for the generation of haptic feedback are seen in figure 4, which is an exploded view of the rotary interface element 100.

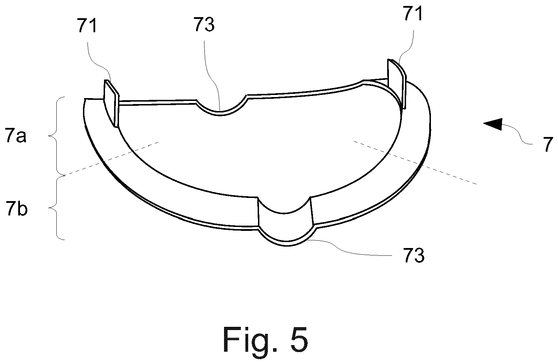

The bent ring 7 is shown in perspective in figure 5 in a schematic fashion and in greater detail.

The bent ring 7 is an annular piece of elastic material, for example moulded plastic, bent along one of its diameters, so as to present two top arches 7a that are convex and pointing upwards (towards the rotor disc 11), and two bottom arches 7b that are concave and point downwards (towards the bottom disc 15). The bent ring 7 could as an alternative be an annular portion of a hyperbolic paraboloid.

The top portions of the top arches 7a carry locking fingers 71, which extend in a direction parallel to the rotational axis *A*, the ones on the top arches 7a point upwards and are encased in finger slits of the stator 5 (see figure 2) that lock it in rotational position. The bottom portions of the bottom arches 7b carry haptic fingers 73, which point downwards and engage in the haptic asperities 19.

The haptic fingers 73 are here in particular obtained in form of a smaller convex arch, pointing towards the bottom disc 15, on the bottom portions of the bottom arches 7b. A change of the resistance torque is then generated during rotation of the rotor disc 11 when the haptic fingers 73 snap in and out of one recess in the haptic asperities 21.

For better cooperation of the haptic fingers 73 with the haptic asperities 19, the smaller arches forming the haptic fingers 73 are of a similar shape as the recesses in the haptic asperities 19, so as to perfectly snap in.

Other possible structures carrying the haptic fingers 23 are also possible, for example, two blades glued to the stator 5 could carry the haptic fingers 23 at their lower extremities. However, the presence of the bent ring 7 means that no glue or elaborate fixation means are required. The obtained rotary interface element 100 has also a particularly silent haptic return generation.

The rotary interface element 100 as previously described, with the bent ring 7 is also easier and faster to assemble.

Starting with the stator 3, the radial rollers 5 are inserted in their respective housings with their axial shafts 53 in the slits 37.

The rotor shaft 11 is inserted in the through hole forming the stator bearing 31, until the rotor disc 11 is inserted in the disc shaped recess 30, so that the front surface *S* is flush with an external surface of the stator 3, and the opposite side rests against the noise reducing rings 55 of the radial roller 5.

From the opposite side the bent ring 7 is inserted in the tubular recess, with its locking fingers 71 inserted in the holes in the stator 3. Then, the bottom disc 15 is put in place, with its bottom shaft portion 17 encasing the lower portion of the rotor shaft 13, locking every element in place while still allowing rotation of the rotor 1 to rotate.

The different elements of the interface element 100 can be obtained by injection moulding of plastic material, and he noise reduction ring 55 can be added on the radial rollers 5 by overmoulding.

The associated process to assemble it is easily implemented, and fast to complete, since no gluing is required. The obtained rotary interface element 100 is consequently potentially cheaper, in particular as no precisely shaped metal parts are required, and its rotation is less noisy, while the rotor disc 11 is supported so that it does not give in under the pressure of the user's *U* fingers.

While its fabrication and assembly makes the obtained rotary interface element 100 potentially cheap, the result is a rotary interface element 100 with high perceived quality.

## Claims

1. Rotary interface element (100), comprising:
a rotor (1), the rotation of which causes a control signal, the rotor (1) comprising a rotor disc (11) comprising a disc-shaped contact surface (*S*) on which a user (*U*) can press one or more fingers,
• a stator (3), stationary with respect to the rotor (1), the stator (3) comprising a disc shaped recess (30) for the rotor disc (11),
• radial rollers (5), disposed radially with respect to the rotor disc (11) in housings (35, 37) under the rotor disc (11), having a cylindrical central body (51) against which the rotor disc (11) is resting,
**characterized in that**:
- the rotor further comprises a rotor shaft (13) bound in rotation with the rotor disc (11) which is flush with a surrounding surface in which the rotary interface element (100) is implemented,
- the stator (3) comprises a bearing (31) for the rotor shaft, the housings (35, 37) being made in the stator (3),
- the radial rollers (5) are resting against the side of the rotor disc (11) opposite the contact surface (*S*),
- the rotor (1) comprises a bottom disc (15) at the opposite end of the rotor shaft (13) with respect to the rotor disc (11), bound in rotation with said rotor shaft (13) and having haptic asperities (19) on its outer rim, and
the rotary interface element (100) further comprises haptic fingers (73) pressed against the haptic asperities (19) so as to generate a haptic feedback when the rotor (1) is set in rotational motion.

2. Rotary interface element according to claim 1, **characterized in that** the radial rollers comprise each a noise reducing ring (55), which is in contact with the rotor disc (11).

3. Rotary interface element according to claim 2, **characterized in that** the noise reducing ring (55) is made of elastic material, in particular rubber.

4. Rotary interface according to claim 2 or 3, **characterized in that** the noise reducing rings (55) are overmoulded on the central bodies (51) of the radial rollers (5).

5. Rotary interface element according to claim 1, 2 or 3, **characterized in that** the rollers comprise two axial shafts (53) at opposite axial ends of the central body (51), and **in that** the housings for the radial rollers (5) comprise two radially opposite slits (37) for the axial shafts (53).

6. Rotary interface element according to claim 5, **characterized in that** the radial rollers (5) comprise two spacing shoulders (57) with intermediate diameter between the diameters of the central body (51) and of the axial shafts, situated at the opposite axial ends of the central body (51) and forming a base from which the axial shafts (53) extend.

7. Rotary interface according to any of the precedent claims, **characterized in that** the bottom disc (11) comprises a bottom shaft portion (17), and **in that** the rotor shaft (13) and the bottom shaft portion (17) comprise for one a tubular hole and for the other a tubular portion mutually frictionally engaged in one another.

8. Rotary interface element according to any of the precedent claims, **characterized in that** it further comprises a bent ring (7) of elastic material, bent along a diameter, comprising two top arches (7a) that are pointing towards the rotor disc (11), and two bottom arches (7b) that are pointing towards the bottom disc (15), and **in that** the top arches (7a) carry two locking fingers (71) that engage in holes in the stator (3) and the bottom arches (7b) carry two haptic fingers (73) that engage in the haptic asperities (19)

9. Rotary interface element according to claim 8, **characterized in that** the bent ring (7) is made of moulded plastic.

10. Rotary interface element according to claim 8 or 9, **characterized in that** the haptic fingers (73) are smaller convex arches, pointing towards the bottom disc (15) on the bottom portions of the bottom arches (7b).

## Patentansprüche

1. Drehschnittstellenelement (100), umfassend:
einen Rotor (1), dessen Drehung ein Steuersignal erzeugt, wobei der Rotor (1) eine Rotorscheibe (11) umfasst, die eine scheibenförmige Kontaktfläche (S) umfasst, auf die ein Benutzer (U) mit einem oder mehr Fingern drücken kann,
• einen Stator (3), der bezüglich des Rotors (1) stationär ist, wobei der Stator (3) eine scheibenförmige Aussparung (30) für die Rotorscheibe (11) umfasst,
• radiale Rollen (5), die bezüglich der Rotorscheibe (11) radial in Gehäusen (35, 37) unter der Rotorscheibe (11) angeordnet sind und mit einem zylindrischen mittleren Körper (51) an dem die Rotorscheibe (11) ruht,
**dadurch gekennzeichnet, dass**:
- der Rotor ferner eine Rotorwelle (13) umfasst, die drehfest mit der Rotorscheibe (11) verbunden ist, die mit einer umliegenden Fläche bündig ist, in der das Drehschnittstellenelement (100) implementiert ist,
- der Stator (3) ein Lager (31) für die Rotorwelle umfasst, wobei die Gehäuse (35, 37) in dem Stator (3) ausgeführt sind,
- die radialen Rollen (5) an der der Kontaktfläche (S) gegenüberliegenden Seite der Rotorscheibe (11) anliegen,
- der Rotor (1) eine untere Scheibe (15) an dem bezüglich der Rotorscheibe (11) entgegengesetzten Ende der Rotorwelle (13) umfasst, die drehfest mit der Rotorwelle (13) verbunden ist und haptische Unebenheiten (19) an ihrem Außenrand hat, und
das Drehschnittstellenelement (100) ferner haptische Finger (73) umfasst, die gegen die haptischen Unebenheiten (19) gedrückt sind, um eine haptische Rückmeldung zu erzeugen, wenn der Rotor (1) in Drehbewegung versetzt wird.

2. Drehschnittstellenelement nach Anspruch 1, **dadurch gekennzeichnet, dass** die radialen Rollen jeweils einen Geräuschreduzierungsring (55) umfassen, der mit der Rotorscheibe (11) in Kontakt ist.

3. Drehschnittstellenelement nach Anspruch 2, **dadurch gekennzeichnet, dass** der Geräuschreduzierungsring (55) aus elastischem Material, insbesondere Kautschuk, hergestellt ist.

4. Drehschnittstelle nach Anspruch 2 oder 3, **dadurch gekennzeichnet, dass** die Geräuschreduzierungsringe (55) auf die mittleren Körper (51) der radialen Rollen (5) überspritzt werden.

5. Drehschnittstellenelement nach Anspruch 1, 2 oder 3, **dadurch gekennzeichnet, dass** die Rollen zwei axiale Wellen (53) an entgegengesetzten axialen Enden des mittleren Körpers (51) umfassen und dass die Gehäuse für die radialen Rollen (5) zwei radial gegenüberliegende Schlitze (37) für die axialen Wellen (53) umfassen.

6. Drehschnittstellenelement nach Anspruch 5, **dadurch gekennzeichnet, dass** die radialen Rollen (5) zwei Abstandhalterschultern (57) mit einem Durchmesser umfassen, der zwischen den Durchmessern des mittleren Körpers (51) und der axialen Wellen liegt, wobei die Abstandhalterschultern an den entgegengesetzten axialen Enden des mittleren Körpers (51) angeordnet sind und eine Basis bilden, von der aus sich die axialen Wellen (53) erstrecken.

7. Drehschnittstelle nach einem der vorhergehenden Ansprüche, **dadurch gekennzeichnet, dass** die untere Scheibe (11) einen unteren Wellenabschnitt (17) umfasst und dass die Rotorwelle (13) und der untere Wellenabschnitt (17) jeweils ein rohrförmiges Loch und einen rohrförmigen Abschnitt umfassen, die in gegenseitigem Reibeingriff miteinander stehen.

8. Drehschnittstellenelement nach einem der vorhergehenden Ansprüche, **dadurch gekennzeichnet, dass** es ferner einen gebogenen Ring (7) aus elastischem Material umfasst, der entlang eines Durchmesser gebogen ist und zwei obere Bögen (7a), die zu der Rotorscheibe (11) weisen, und zwei untere Bögen (7b), die zu der unteren Scheibe (15) weisen, umfasst und dass die oberen Bögen (7a) zwei Verriegelungsfinger (71) tragen, die in Löchern in dem Stator (3) in Eingriff kommen, und die unteren Bögen (7b) zwei haptische Finger (73) tragen, die in den haptischen Unebenheiten (19) in Eingriff kommen.

9. Drehschnittstellenelement nach Anspruch 8, **dadurch gekennzeichnet, dass** der gebogene Ring (7) aus geformtem Kunststoff hergestellt ist.

10. Drehschnittstellenelement nach Anspruch 8 oder 9, **dadurch gekennzeichnet, dass** die haptischen Finger (73) kleinere konvexe Bögen sind, die zu der unteren Scheibe (15) an den unteren Abschnitten der unteren Bögen (7b) weisen.

## Revendications

1. Élément d'interface rotatif (100), comprenant :
un rotor (1), dont la rotation provoque un signal de commande, le rotor (1) comprenant un disque de rotor (11) comprenant une surface de contact en forme de disque (S) sur laquelle un utilisateur (U) peut appuyer un ou plusieurs doigts,
un stator (3), stationnaire par rapport au rotor (1), le stator (3) comprenant un évidement en forme de disque (30) pour le disque de rotor (11),
des rouleaux radiaux (5), disposés radialement par rapport au disque de rotor (11) dans des logements (35, 37) sous le disque de rotor (11), ayant un corps central cylindrique (51) contre lequel le disque de rotor (11) repose,
**caractérisé en ce que** :
le rotor comprend en outre un arbre de rotor (13) lié en rotation avec le disque de rotor (11) qui est affleurant avec une surface environnante dans laquelle l'élément d'interface rotatif (100) est mis en œuvre,
le stator (3) comprend un palier (31) pour l'arbre du rotor, les logements (35, 37) étant réalisés dans le stator (3),
les rouleaux radiaux (5) reposent contre le côté du disque de rotor (11) opposé à la surface de contact (S),
le rotor (1) comprend un disque inférieur (15) au niveau de l'extrémité opposée de l'arbre de rotor (13) par rapport au disque de rotor (11), lié en rotation avec ledit arbre de rotor (13) et ayant des aspérités haptiques (19) sur son rebord extérieur, et
l'élément d'interface rotatif (100) comprend en outre des doigts haptiques (73) pressés contre les aspérités haptiques (19) de sorte à générer un retour haptique lorsque le rotor (1) est mis en mouvement de rotation.

2. Élément d'interface rotatif selon la revendication 1, **caractérisé en ce que** les rouleaux radiaux comprennent chacun une bague de réduction de bruit (55), qui est en contact avec le disque de rotor (11) .

3. Élément d'interface rotatif selon la revendication 2, **caractérisé en ce que** la bague de réduction de bruit (55) est en matière élastique, notamment en caoutchouc.

4. Interface rotative selon la revendication 2 ou 3, **caractérisée en ce que** les bagues de réduction de bruit (55) sont surmoulées sur les corps centraux (51) des rouleaux radiaux (5).

5. Élément d'interface rotatif selon la revendication 1, 2 ou 3, **caractérisé en ce que** les rouleaux comprennent deux arbres axiaux (53) au niveau des extrémités axiales opposées du corps central (51), et **en ce que** les logements pour les rouleaux radiaux (5) comprennent deux fentes radialement opposées (37) pour les arbres axiaux (53).

6. Élément d'interface rotatif selon la revendication 5, **caractérisé en ce que** les rouleaux radiaux (5) comprennent deux épaulements d'espacement (57) de diamètre intermédiaire entre les diamètres du corps central (51) et des arbres axiaux, situés au niveau des extrémités axiales opposées du corps central (51) et formant une base à partir de laquelle s'étendent les arbres axiaux (53).

7. Interface rotative selon l'une quelconque des revendications précédentes, **caractérisée en ce que** le disque inférieur (11) comprend une partie d'arbre inférieur (17), et **en ce que** l'arbre de rotor (13) et la partie d'arbre inférieur (17) comprennent pour l'un un trou tubulaire et pour l'autre une partie tubulaire venant mutuellement en prise par friction l'un avec l'autre.

8. Élément d'interface rotatif selon l'une quelconque des revendications précédentes, **caractérisé en ce qu'**il comprend en outre une bague courbée (7) en matière élastique, courbée le long d'un diamètre, comprenant deux arcs supérieurs (7a) qui pointent vers le disque de rotor (11), et deux arcs inférieurs (7b) qui sont dirigés vers le disque inférieur (15), et **en ce que** les arcs supérieurs (7a) portent deux doigts de verrouillage (71) qui viennent en prise avec des trous dans le stator (3) et les arcs inférieurs (7b) portent deux doigts haptiques (73) qui viennent en prise avec les aspérités haptiques (19).

9. Élément d'interface rotatif selon la revendication 8, **caractérisé en ce que** la bague courbée (7) est en plastique moulé.

10. Élément d'interface rotatif selon la revendication 8 ou 9, **caractérisé en ce que** les doigts haptiques (73) sont des arcs convexes plus petits, pointant vers le disque inférieur (15) sur les parties inférieures des arcs inférieurs (7b).
